# EUROPEAN PATENT SPECIFICATION

(11) **EP 1 696 073 B1**
(45) Date of publication and mention of the grant of the patent: **26.05.2010**
(21) Application number: 04807211.0
(22) Date of filing: 10.12.2004
(51) Int. Cl.: D06N 3/00, D06N 3/12, D06N 3/18

(54) **LEATHER-LIKE SHEET MATERIAL AND PROCESS FOR PRODUCING THE SAME**
LEDERARTIGES FLÄCHENMATERIAL UND HERSTELLUNGSVERFAHREN DAFÜR
SIMILICUIR ET SON PROCEDE D'OBTENTION

(30) Priority: 15.12.2003 JP 2003416304; 29.03.2004 JP 2004094669
(43) Date of publication of application: 30.08.2006
(73) Proprietor: Teijin Cordley Limited, Ooda-shi Shimane 694-0041 (JP)
(72) Inventor: ONO, Hitoshi, Teijin Techno Products Limited, Mihara-shi, Hiroshima 723-0015 (JP); KIKUCHI, Masayoshi, Teijin Techno Products Ltd., Mihara-shi, Hiroshima 723-0015 (JP); MAEDA, Satoshi, Teijin Techno Products Limited, Mihara-shi, Hiroshima 723-0015 (JP); OHKAWA, Nobuo, Teijin Techno Products Limited, Mihara-shi,Hiroshima 723-0015 (JP)
(74) Representative: Hallybone, Huw George
(86) International application number: PCT/JP2004/018853
(87) International publication number: WO 2005/056913

(56) References cited:
- WO-A-00/59723
- JP-A- 6 146 174
- JP-A- 2000 248 472
- JP-A- 2003 049 369
- US-A1- 2003 162 014

## Description

### Technical Field

The present invention relates to a process for the production of a leather-like shoot material. More specifically it relates to a process for the production of a leather-like sheet material suitable for a grain type artificial leather formed by bonding a fibrous substrate and an elastomeric film layer with an adhesive layer.

### Technical Background

A grain type leather-like sheet material having an elastomeric layer on the surface is used in broad fields of shoes, balls, bags, articles of furniture, surface material for automobiles, clothing materials, etc., as an artificial leather or synthetic leather. In these fields in recent years, thore are naturally demanded such leather-like sheet materials having excellent abrasion resistance while maintaining flexibility.

It is said that of leather-like sheet materials, a leather-like sheet material obtained by laminating an elastomeric layer on a fibrous substrate has a relatively large film thickness and has excellent abrasion resistance. For a technique for further improving the abrasion resistance of a leather-like sheet material obtained by such a laminating method, for example, JP-A-9-31682 proposes a synthetic leather having a film layer formed of a silicone-modified polyurethane, and JP-A-2000-248472 proposes a leather-like sheet material having a film layer formed of a silicone-modified polyurethane resin crosslinked with a polyisocyanate-containing curing agent and an adhesive layer formed of a non-crosslinked polyurethane resin.

However, while these materials are improved in abrasion resistance by decreasing the frictional coefficient of the elastomeric film layer, the adhesion strength between the film layer and the adhesive layer tends to decrease, and they have a problem that a peeling is liable to take place. Further, since the adhesive contains an organic solvent, the problem is that an elastic polymer as an adhesive infiltrates the fibrous substrate, so that such a leather-like sheet material hardens.

Further, there is another problem that since an organic solvent is mainly used with the elastic polymer that is an adhesive, the sheet-like material has a residual organic solvent after dried. On the other hand, since it is usual practice to use a mixture of several kinds of organic solvents, it is very difficult to recover such organic solvents that have evaporated during a drying step, so that a large amount of them are emitted into atmosphere, having caused concerns about their influences on the global environment.

### Disclosure of the Invention

### Problems to be solved by the Invention

The present invention has been made against the background of the above prior art. It is a first object of the present invention to provide a process for the production of a leather-like sheet material that is improved in abrasion resistance and at the same time is excellent in tenacity against peeling and flexibility. It is a second object of the present invention to provide a process for the production of a sheet-like material substantially free of an organic solvent since it uses an adhesive containing no organic solvent but containing water as a solvent.

### Means to Solve the Problems

According to studies the present inventors have made, it has been found that the above object of the present invention can be achieved by a process for the production of a leather-like sheet material by attaching a fibrous substrate and an elastomeric film layer to each other, which comprises applying a water solution or water dispersion of an elastic polymer, tho water solution or water dispersion containing a silicone compound, to the attachment surface of one of the above fibrous substrate and the above elastomeric film layer and drying the applied solution or dispersion.

### Best Mode for Embodiments of the Invention

The process for the production of the leather-like sheet material according to the present invention will be more specifically explained below.

Examples of the fiber for constituting the fibrous substrate in the leather-like sheet material of the process of the present invention include polyamide fibers such as nylon-6, nylon-66, nylon 610, nylon-11 and nylon-12; polyester fibers such as polyethylene terephthalate, polytriethylene terephthalate, polybutylene terephthalate and copolyesters formed from these as main components; and fibers formed from mixtures of some members of these. Of these, a polyethylene terephthalate fiber or a nylon-6 fiber is preferred in view of production stability and a cost. In particular, when a polyester filament is mainly contained as a fiber, it is more preferred since the effect of the present invention is more efficiently produced.

The smaller the fineness of these fibers becomes, the more preferred these fibers are. Fibers having a fineness of 0.0001 dtex to 2 dtex are generally used. Further, fibers having a fineness of 0.001 to 0.3 dtex are more preferred. When a leather-like sheet material uses a fiber having a fineness of over 2 dtex, the texture thereof tends to be become too hard. In view of texture and physical properties, the fiber constituting the fibrous substrate is preferably a splittable fiber and further preferably a splittable fiber composed of polyester and nylon. These fibers can be obtained by a known spinning method. When the fineness of them is decreased, for example, there can be employed a method of producing a blend fiber, a sea-island fiber or a strippable and splitable fiber.

The fiber for constituting the fibrous substrate is preferably a filament fiber. A nonwoven fabric is generally formed from a 10 cm long staple fiber. However, when a continuous filament fiber is used, the texture and the strength in the width and length directions can be well balanced. Further, few fibers drop off from the cross section, etc., of the sheet material, and the sheet material comes to be excellent in the feeling of the reverse surface thereof.

Further, the fiber aggregate of the fibrous material preferably has an apparent density in the range of 0.25 to 0.35 g/cm³. When the density is low, preferably, the fiber is shrunk after intertwined by needle punching. In this case, the fiber is shrunk by properly 20 to 50 % of the original area. For smoothening the surface thereof, the fiber aggregate (nonwoven fabric) surface is preferably nipped with a mirror-surface metal roll.

The fibrous substrate for use in the process of the present invention includes not only the above fiber aggregate composed substantially of fibers but a composite material obtained by incorporating an elastic polymer into a fiber aggregate. The fiber aggregate is suitably selected from a woven fabric, a knitted cloth, a nonwoven fabric, or the like which are used for conventional artificial leather or synthetic leather.

The composite material composed from a fiber aggregate and an elastic polymer refers to a composite material obtained by compounding an elastic polymer and the above fiber aggregate, such as a so-called impregnated composite material obtained by impregnating a fiber aggregate with a solution or dispersion of an elastic polymer and drying the impregnated fiber aggregate, or a material obtained by forming the same or different elastic polymer layers on the surfaces of such an impregnated composite material. Examples of the elastic polymer include SBR, NBR, polyurethane, polyester elastomer and acrylic ester. As a method for forming a composite material of an elastic polymer and a fiber aggregate, there is generally employed a method in which a fiber aggregate is impregnated with a solution of an elastic polymer in a solvent or a dispersion of an elastic polymer in a dispersion medium and the solvent or the dispersion medium is removed by extraction or evaporation. Above all, the method using a dispersion of an elastic polymer in water is preferred in view of the working environment. As another method, there is a method in which a fiber structure is impregnated with a heat-melted product of an elastic polymer or a method in which a fiber structure is impregnated with a raw material or intermediate for an elastic polymer and then an elastic polymer is formed.

Composite materials obtained by these methods include a composite material whose surface is formed of a fiber alone and a composite material whose surface is formed of a mixture of a fiber and an elastic polymer depending upon to what degree a surface residue of the elastic polymer is scratched off after the impregnation with the solution, dispersion or liquefied material of the elastic polymer. It is sufficient to keep oven a slight amount of the fiber existing on the surface, while a large amount of the existing fiber is effective.

The above fibrous substrate preferably has a thickness of 0.5 to 2 mm.

The leather-like sheet material produced by the process of the present invention has a structure in which the above fibrous substrate and the above elastomeric film layer are bonded to each other. This elastomeric film layer is composed mainly of an elastic polymer.

Examples of the above elastic polymer includes SBR, NBR, polyurethane, polyester elastomer and acrylic ester. Of these, polyurethane is preferred. Further, a polycarbonate/polyether polyurethane is preferred, or a non-yellowing polyurethane is preferred. When a film layer thereof is employed, it can be secured that the surface of the leather-like sheet material is excellent in durability and flexibility.

For bonding the fibrous substrate and the film layer, preferably, the film layer is formed on a release sheet. As a method for forming the film layer of an elastic polymer on the release sheet, there can be employed a method in which a solution of an elastic polymer in a solvent or a dispersion of an elastic polymer in a dispersing medium is coated on the release sheet and the solvent or dispersing medium is evaporated. Above all, the method of using a dispersion of an elastic polymer in water is preferred in view of the working environment.

The thickness of the film layer is to be determined so as to be fit for the texture by taking account of a balance with the thickness of the fibrous substrate. Generally, however, the thickness of the film layer is preferably 10 µm to 100 µm, particularly preferably 30 to 70 µm. When the above thickness is less than 10 µm, it tends to be difficult to obtain performances of the leather-like sheet material, such as performances of yellowing resistance, hydrolysis resistance, adhesiveness, and the like. When the above thickness exceeds 100 µm, the surface texture is liable to be hard, and it tends to be difficult to obtain the texture that fits to the leather-like sheet material.

The leather-like sheet material produced by the process of the present invention has a structure in which the above fibrous substrate and the above elastomeric film layer are bonded to each other with an adhesive. This adhesive has characteristic features that the adhesive forms a layer formed of an elastic polymer, that the adhesive is water-soluble or water-dispersible and that the adhesive contains a silicone compound.

The leather-like sheet material produced by the process of the present invention is therefore produced by a so-called laminating method in which an adhesive is applied to the surface of one of the fibrous substrate or the elastic film layer that are prepared beforehand and the fibrous substrate and the elastic film layer are bonded to each other through the adhesive layer, followed by drying. This adhesive is a water solution or water dispersion of an elastic polymer, and the water solution or water dispersion containing a silicone compound is used.

The adhesive constituting the adhesive layer is an elastic polymer, and it is specifically a polyurethane-based or polyolefin-based adhesive. A polyurethane-based adhesive is preferred, and there is obtained a leather-like sheet material not only excellent in adhesiveness but also excellent in flexibility and abrasion resistance. Of polyurethane-based adhesives, polycarbonate/polyether-containing polyurethane is preferred, and the leather-like sheet material is excellent in durability and flexibility of a skin layer formed of the film layer and the adhesive layer.

Further, the adhesive in the present invention is water-soluble or water-dispersible and is used in the form of a water solution or a water dispersion. Since it is such a water-born adhesive, it can easily contain a silicone compound.

Generally, an adhesive is soluble in a polar organic solvent but is not easily soluble in a nonpolar organic solvent. On the other hand, a silicone compound is not soluble in a polar organic solvent but is soluble in a nonpolar organic solvent. In the present invention, the adhesive is not any organic solvent type but is an aqueous type, so that these solubility problems can be overcome.

In the present invention, further, the use of the water-born adhesive serves to improve the resultant leather-like sheet material in texture. In a conventional process for the production of a leather-like sheet material such as artificial leather, it is general to use, as an adhesive, an organic solvent solution type containing an organic solvent. In this process, it is difficult to control the thickness of infiltration of the adhesive into a fibrous substrate since an organic solvent is contained, so that the texture is liable to easily vary. Further, when the organic solvent is a good solvent for the elastic polymer contained in the fibrous substrate, it swells or dissolves the elastic polymer to perform re-bonding, so that the original texture of the fibrous substrate is liable to be impaired. Due to the use of the water-born adhesive, the present invention is free from the detrimental effect in texture that the organic solvent has when the bonding is carried out.

Since, however, a layer obtained from the water-born adhesive easily swells in water or is dissolved in water, the water-born adhesive is preferably a crosslinking reaction type, a so-called two-component type adhesive, for overcoming this problem. The crosslinking agent is selected from melamine-, polyisocyanate- and epoxy-containing crosslinking agents. Of these, a polyisocyanate-containing crosslinking agent is preferred in view of the working environment and flexibility.

The water solution or dispersion of adhesive for use in the present invention contains a silicone compound. The silicone compound preferably includes dimethyl silicone oil, high-molecular-weight dimethyl silicone, amino-modified silicone oil, high-molecular-weight amino-modified silicone, reactive H-silicone and modified compounds of these. A mixture of two or more of these may be used as well. As a silicone compound for use in the present invention, reactive H-silicone, in particular methyl hydrodiene silicone oil, is particularly preferred. Such a silicone compound is greatly effective at attaining flexibility and improving abrasion resistance.

The above reactive H-silicone refers to a silicone containing Si-H groups.

It is thought that the silicone compound forms a solidified silicone film between a fiber of surface layer of the fibrous substrate and the surface of the adhesive due to migration thereof in the adhesive. This silicone film decreases the frictional coefficient between the fiber and the adhesive and increases the freedom of the fiber to attain flexibility. Further, the flexibility, or the like moderates dynamic stimulus during friction, and even the abrasion resistance is improved.

The silicone compound for use in the present invention is preferably used in the form of a water dispersion or water solution prepared in the presence of an emulsifier. The silicone compound in such a form is mixed with the water dispersion or water solution that is the water-based adhesive before use.

As a silicone compound for use in the present invention, the reactive H-silicone is particularly preferred and more greatly improves the flexibility and abrasion resistance. The reason therefor is thought to be as follows. When water as a solvent or dispersing medium is dried after the adhesive is applied, H-silicone in the form of oil is driven out to be on the adhesive surface as the adhesive comes to be solidified. Then, the H-silicone reacts to be solidified, and when the fibrous substrate and the film layer are bonded to each other by attaching them and drying the adhesive, the H-silicone prevents the adhesion-binding of the adhesive and the fiber constituting the fibrous substrate.

The content of the silicone compound in the adhesive solid content of the adhesive layer in the present invention is preferably 0.5 to 8 % by weight. When the content of the above existent silicone compound is small, the effect on attaining the flexibility and improving the abrasion resistance tends to decrease. When the content of the existent silicon compound is too large, it tends to cause a decrease in the adhesion strength due to a decrease in the strength of the adhesive layer and a decrease in the flexing resistance. The content of the silicone compound is particularly preferably 1.0 to 4.0 % by weight as a solid content.

Further, the adhesive liquid in the present invention preferably has a viscosity of 3,000 to 10,000 mPa·s. When the above viscosity is too low, the adhesive easily infiltrates the fibrous substrate and tends to become hard. When it is too high, the adhesion between the fibrous substrate and the film layer tends to decrease, to decrease the adhesive strength.

The thickness of the adhesive layer in the present invention is preferably 30 to 150 µm, particularly preferably 50 to 120 µm. In this case, a bonding layer is a continuous layer formed of the elastic polymer. For example, while the elastic polymer solution is applied to the fibrous substrate surface, if a formed layer comes to be discontinuous since the elastic polymer solution infiltrates to excess, no bonding layer is constituted. Therefore, the "thickness of infiltration° of the adhesive into the substrate sometimes does not constitute a part of the "bonding layer".

In the leather-like sheet material produced by the process of the present invention, the adhesive layer may contain microcapsule particles charged with gas bubbles. When the adhesive layer contains microcapsule particles charged with gas bubbles, the adhesive layer is converted to a porous layer, and the leather-like sheet material is improved in flexibility. Further, the thickness of the adhesive layer is increased, and the leather-like sheet material is improved in abrasion resistance. Desirably, the content of the microcapsule particles charged with gas bubbles in the adhesive layer, based on the weight of the solid content of the adhesive, is in the range of 0.5 to 10 % by weight, preferably 1 to 5 % by weight.

For causing the adhesive layer to contain the microcapsule particles charged with gas bubbles, it is preferred to employ a method in which an adhesive liquid obtained by mixing the water solution or water dispersion of the adhesive with thermally expandable microcapsule particles is applied to the fibrous substrate and/or the elastomeric film layer and dried and the fibrous substrate and the elastomeric film layer are attached and bonded to each other. In this bonding, preferably, the thermally expandable microcapsule particles are thermally expanded by heating under pressure. The heating is preferably carried out with a roll formed of a metal heating cylinder at 100 to 130°C.

The thermally expandable microcapsule particles preferably have a size (diameter) of 10 to 30 µm, and they advantageously have a thermal expansion start temperature of 80 to 120°C. The thermally expandable microcapsules particles are microcapsule particles whose shells are composed from a copolymer of vinylidene chloride or acrylonitrile, and commercially available ones can be used.

The leather-like sheet material produced by the process of the present invention has the adhesive layer formed of the water-soluble or water-dispersible elastic polymer, so that the content of the organic solvent therein can be decreased. In the leather-like sheet material produced by the process of the present invention, the content of the organic solvent therein is preferably 0.05 % by weight or less, further preferably, 0 to 0.03 % by weight. The smaller the content of the organic solvent is, the smaller the amount of the organic solvent that evaporates from the adhesive layer during use is, so that a smaller content of the organic solvent is environmentally friendly. Further, the leather-like sheet material preferably has high durability against an organic solvent, and it is preferably non-soluble in an organic solvent since it suffers no change in shape when it contacts the organic solvent. The above organic solvent includes DMF. MEK, toluene, methyl alcohol, isopropyl alcohol, and the like.

As described already, the leather-like sheet material produced by the process of the present invention has a structure in which the fibrous substrate and the elastomeric film layer are bonded to each other through the adhesive layer, and the adhesive layer has a characteristic feature that it contains the silicone compound and is formed of the water-soluble or water-dispersible elastic polymer.

In the leather-like sheet material produced by the process of the present invention, the adhesive layer is present also as an intermediate layer. In the contact boundary between the adhesive layer and the fibrous substrate, preferably, the adhesive layer bonds in a manner in which the adhesive layer infiltrates the fibrous substrate in an infiltration thickness of 15 to 50 µm, preferably 20 to 45 µm, from the fibrous substrate surface.

As one method for causing the adhesive layer to infiltrate the fibrous substrate in the above thickness, there is a method in which a treatment liquid, which is an elastic polymer water solution or water dispersion containing a silicone compound, is applied to the fibrous substrate surface in advance, the treatment liquid is caused to infiltrate the fibrous substrate so that treatment liquid penetrates in the range of 15 to 50 µm from the fibrous substrate surface and dried, then, a water solution or dispersion of an elastic polymer is applied to the applied surface and the elastomeric film layer is bonded.

The concentration of the elastic polymer (adhesive) water solution or water dispersion for use as the treatment liquid is required be 20 to 65 % by weight, and further, is preferably 40 to 60 % by weight. When the above concentration is less than 20 % by weight, it is not possible to sufficiently increase the ratio of the elastic polymer existing on the fibrous substrate surface, and the abrasion resistance is not improved. Further, when the above concentration exceeds 60 %, undesirably, the texture of the resultant artificial leather, in particular the surface texture thereof, becomes hard. The viscosity thereof is preferably in the range of 1,000 to 20,000 mPa·s.

The method for applying the above treatment liquid to the fibrous substrate surface is not specially limited, and there can be employed, for example, a knife coating method in which the treatment liquid existing on the substrate is scraped off with a knife with a predetermined clearance. The adhesion amount of the adhesive (elastic polymer) in this case is preferably 15 to 60 g/m² as a dry solid content. When the amount of the adhesive (elastic polymer) that has been applied and has infiltrated exceeds 60 g/m², the texture becomes hard, and the infiltration is required to be deep since the adhesive amount is large. As a result, the density of the adhesive existing on the surface portion of the fibrous substrate decreases, and a sheet material finally obtained tends to have decreased abrasion resistance. Further, when the amount of the adhesive that has infiltrated is less than 15 g/m², the abrasion resistance tends to decrease.

As described already, the adhesive layer of the leather-like sheet material produced by the process of the present invention has (i) a composition containing a silicone compound and containing a water-soluble or water-disperalble elastic polymer or (ii) a composition containing a silicone compound and microcapsule particles charged with gas bubbles and containing a water-soluble or water-dispersible elastic polymer. The adhesive layer may have any composition of the above (i) or (ii), and in each case, the composition may be a uniform composition or non-uniform composition that will be described later. For example, the adhesive layer may be composed of two or more layers having different compositions. Specifically, the adhesive layer may have a multi-layer constitution as will be shown in the following examples. The following examples will be explained with reference to cases where the adhesive layer has two layer for simplification of explanations, while the adhesive layer may have three layers or more. Further, it is to be understood that a first layer stands for a layer on the fibrous substrate side and that a second layer is a layer on the elastomeric film layer side.
(a) The first layer and the second layer are composed of layers having compositions containing a silicon compound but having different contents thereof. In this case, desirably, the first layer has a larger content of a silicone compound than the second layer.
(b) The first layer is composed of a composition containing a silicon compound, and tho second layer is composed of a composition containing no silicone compound.
(c) Both the first layer and the second layer are composed of compositions that have the same constitutions as those in the above (a) and that further contain microcapsule particles charged with gas bubbles.
(d) The first layer and the second layer are composed of compositions that have the same constitutions as those in the above (b) and that further contain microcapsule particles charged with gas bubbles.
(e) The first layer is a layer composed of a composition containing a silicon compound but containing substantially no microcapsule particles charged with gas bubbles, and the second layer in a layer composed of a composition containing substantially no silicone compound but containing microcapsule particles charged with gas bubbles.

Examples shown in the above (a) to (e) arc cases whore the adhesive layer is composed of two layers, and the adhesive layer may have a constitution of three or more layers by modifying these to a certain extent. In the above shown examples, (a), (b) and (e) are preferred, and (e) is particularly preferred.

The leather-like sheet material produced by the process of the present invention is produced by a method in which the adhesive liquid is applied to the surface of the fibrous substrate or the elastomeric film layer, and finally they are bonded to each other by attaching the fibrous substrate and the film layer to each other and drying them. More specifically, a coating of the elastic polymer as a film layer is formed on a release sheet, the adhesive liquid containing the silicone compound is applied thereon and then dried, and then the fibrous substrate is stacked thereon and they are bonded to each other under a pressure as needed. In this case, when a fibrous substrate having a large amount of fibers existing on the surface is used, the adhesive infiltrates fiber-fiber spaces, and the silicone compound effectively works to exhibit an effect on attaining flexibility and an effect on improvement of abrasion resistance. It is thought that when the adhesive liquid infiltrates the fiber-fiber spaces, silicone compound that is discharged onto the surface of the adhesive liquid exhibits an separation effect and prevents the adhesive and the fibers from being intimately bonded, and the adhesive and the fibers are bonded while maintaining the flexibility of the fibers, so that the effect on attaining flexibility is exhibited.

According to the present invention, there are therefore provided the following processes for the production of a leather-like sheet material.
(a) A process for the production of a leather-like sheet material by attaching a fibrous substrate and an elastomeric film layer to each other, which comprises applying a water solution or water dispersion of an elastic polymer, the water solution or water dispersion containing a silicone compound, to the attachment surface of at least one of said fibrous substrate and the elastomeric film layer and drying the applied solution or dispersion.
(b) A process for the production of a leather-like sheet material, wherein the water solution or water dispersion of an elastic polymer, the water solution or water dispersion containing a silicone compound, is applied to the attachment surface of said fibrous substrate, the water solution or water dispersion of an elastic polymer is applied to the attachment surface of the elastomeric film layer, and the fibrous substrate and the elastomeric film layer are attached to each other, followed by drying.
(c) A process for the production of a leather-like sheet material, wherein the water solution or water dispersion of an elastic polymer, the water solution or water dispersion containing a silicone compound, is applied to the attachment surface of said fibrous substrate, the water solution or water dispersion of an elastic polymer, the water solution or water dispersion containing thermally expandable microcapsules, is applied to the attachment surface of the elastomeric film layer, and the fibrous substrate and the elastomeric film layer are attached to each other, followed by drying.

The above processes (a) to (c) explain the basic process for the production of the leather-like sheet material of the present invention. The above production processes preferably include a method in which the fibrous substrate and the elastomeric film layer are attached to each other, and in the contact boundary between the fibrous substrate and the adhesive layer, the adhesive layer is caused to infiltrate the fibrous substrate in a thickness of 15 to 50 µm from the fibrous substrate surface.

Further, the above production processes preferably include a method in which the fibrous substrate and the elastomeric film layer are attached to each other and dried, and then they are nipped with a hot roll at 100 to 150°C to bond them to each other. In this case, when the adhesive liquid contains thermally expandable capsule particles, the particles are expanded to form a porous adhesive layer containing gas bubbles

The leather-like sheet material produced by the process of the present invention is improved in abrasion resistance and at the same time is excellent in tenacity against peeling and flexibility. It can be preferably used in the field of sport shoes, ladies' shoes, shoes for men, etc., in the field of various halls for games, in the fields of external cladding materials for furniture, automobiles, interior decorating materials and industrial materials such as interior materials, in the field of bookbinding for pocket planners, notebooks, etc., and in the field of closing materials.

### Examples

The present invention will be more specifically explained below with reference to Examples.

In Examples, data were measured by the following methods.

### (1) Abrasion resistance

According to the method of ASTM D-3886, a film layer side was abraded using HANDY ROLL P320J (supplied by NORTON Corp.) as a sand paper, and the number of times of abrading, which was counted until the size of an exposed fiber layer in an abraded portion reaches a diameter of 10 mm, was used as abrasion resistance.

### (2) Tenacity against peeling

According to the method of JIS K6301, a fibrous substrate and a film layer were separated 100 mm apart from each other at a tensile rate of 50 mm/minute, and an average of five minimum values obtained every 20 mm was expressed by N/cm and used as tenacity against peeling.

### (3) Flexibility

A 25 mm x 90 mm flexibility test piece was prepared, and the test piece was perpendicularly held with a holding tool in a lower portion that was 20 mm long in the longitudinal direction. The holding tool was caused to slide while the test piece was bent, such that the center portion of the position 20 mm away from the other end of the test piece came in contact with the measuring portion of a U gauge positioned 20 mm high from the holding tool, and the test piece was fixed. A stress value was read on a recorder after 5 minutes and converted to a stress value per a width of 1 cm and the obtained value was used as a flexibility degree. The result was shown by a unit of g/cm.

### (4) Flexing resistance

A test was carried out according to the methods of JIS K6545 and JIS K6505, and the number of times of flexing to cause a cracking was used as flexing resistance.

### (5) Film layer thickness, adhesive layer thickness and infiltration depth

A film layer thickness, an adhesive layer thickness and a depth of infiltration of an elastic polymer of an adhesive layer into a substrate were measured on an electron microscope photograph of cross section of a leather-like sheet material obtained.

### Referential Example 1 (Preparation of fibrous substrate 1)

Nylon-6 (limiting viscosity in m-cresol, 1.1) dried at 120°C was fed into an extruder and melted. Separately, polyethylene terephthalate (limiting viscosity in o-chlorophenol, 0.64) dried at 160°C was melted in other extruder different from the above-mentioned.

Then, the nylon-6 melt flow was introduced at a conduit polymer temperature of 250°C to a spin block maintained at 275°C, the polyethylene terephthalate melt flow was introduced at a 300°C to the spin block, and both of the polymer melt flows were caused to join together and compounded with a rectangular spinner having hollow-forming spinning orifices in a matrix arrangement, followed by spinning at a rate of 2 g/minute·orifice. Spun fibers were drawn at a high speed at an air pressure of 0.35 MPa (at a spinning rate of approximately 4,860 m/minute converted on the basis of a spinning output and the fineness of the composite fiber).

The drawn composite fibers were treated by applying a high voltage of -30 kV, caused to collide with a dispersing plate together with air stream, opened and collected on a net conveyor as a 1 m wide web formed of an exfoliation split type composite fiber having a 16 split multilayer-laminated cross section. Then, the resultant fleece was caused to pass through a pair of upper and lower calender rolls under heat at 100°C to carry out thermal bonding.

The thus-obtained fleece was intertwined by needle punching, then immersed in water, squeezed with a mangle and then subjected to exfoliation treatment with a sheet-shaped material hammering flexing machine to give a nonwoven fabric of very fine fibers having a basis weight of 210g/m². Then, this nonwoven fabric was caused to shrink in warm water at 70°C to give a nonwoven fabric (fiber aggregate) having an area of 60 % based on the area that it had before shrunk.

The so-obtained nonwoven fabric was used as a fibrous substrate 1. This fibrous substrate 1 had a basis weight of 350 g/m², a thickness of 1.0 mm and a flexibility degree of 0.25 g/cm. In addition, the fibers after they were split had a fineness of 0.15 dtex.

### Referential Example 2 (Preparation of fibrous substrate 2)

The nonwoven fabric (fibrous substrate 1) obtained in Referential Example 1 was impregnated with a solution of 10 wt% polyurethane (CRISVON TF50P, supplied by Dainippon Ink and Chemicals, Inc.) in dimethylformamide (to be referred to as "DMF" hereinafter), and then superfluous solution on the nonwoven fabric surface was scraped off. The nonwoven fabric was immersed in water to coagulate the polyurethane and to fully remove DMF, and then the nonwoven fabric was dried at 120°C to give a composite material formed of fibers and an elastic polymer.

The thus-obtained composite material was used as fibrous substrate 2. The obtained fibrous substrate 2 had surfaces formed of fibers and polyurethane that were co-present, and it had a basis weight of 455 g/cm² a thickness of 1.0 mm and a flexibility degree of 0.82 g/cm.

### Referential Example 3 (preparation of fibrous substrate 3)

The nonwoven fabric (the fiber aggregate 1) obtained in Referential Example 1 was impregnated with a mixture of a water dispersion of 20 wt% polyurethane (HYDRAN V2114, supplied by Dainippon Ink and Chemicals, Inc.) with a colorant (DAILAC BLACK HP9451, supplied by Dainippon Ink and Chemicals, Inc.), and superfluous solution on the surface was scraped off. The nonwoven fabric was immersed in hot water at 90°C to coagulate the polyurethane and then dried at 120°C to give a composite material.

The thus-obtained composite material was used as a fibrous substrate 3. The fibrous substrate 3 had surfaces formed of fibers and polyurethane that were co-present, and it had a basis weight of 470 g/cm², a thickness of 1.0 mm and a flexibility degree of 0.57 g/cm.

### Example 1

A release sheet (R53, supplied by LINTEC CORPORATION) was coated with a "preparation obtained by adding 5 parts of a colorant (DAILAC BLACK HS9530, supplied by Dainippon Ink and Chemicals, Inc.) and a thickener (HYDRAN ASSISTER T1, supplied by Dainippon Ink and Chemicals, Inc.) to 100 parts of a 33% water dispersion solution of one-component type ether-based polyurethane (HYDRAN WLS201, supplied by Dainippon Ink and Chemicals, Inc.) with stirring and adjusting its viscosity of 8,000 mPa·s" at a basis weight of 100 g/m², and the formed coating was dried at a temperature of 70°C for 2 minutes and dried at 110°C for 2 minutes. Further, the resultant coating was surface-coated with a "preparation obtained by mixing 100 parts of a 45 % water dispersion of an ether-based two-component type polyurethane adhesive (HYDRAN A441, supplied by Dainippon Ink and Chemicals, Inc.) with 2 parts of a reactive H-silicone aqueous dispersion (DIC SILICONE CONC V, supplied by Dainippon Ink and Chemicals, Inc.), 2 parts of a catalyst (DIC SILICONE CATALYST SC30, supplied by Dainippon Ink and Chemicals, Inc.), 5 parts of a colorant (DILAC BLACK HS9530, supplied by Dainippon Ink and Chemicals, Inc.) and a thickener (HYDRAN ASSISTER T1, supplied by Dainippon Ink and Chemicals, Inc.) and adjusting the viscosity of the mixture to 5,000 mPa·s" at a basic weight of 150 g/m². Then, the thus-obtained layer was dried at a temperature of 90°C for 2 minutes, the fibrous substrate 2 was stacked thereon, and the resultant set was caused to pass on a hot cylinder surface having a temperature of 110°C with a roll having a gap of 0.6 mm therefrom to bond the layer and the substrate to each other under pressure. Then, the resultant laminate was left in an atmosphere at a temperature of 60°C for 2 days, and then the release sheet was peeled off to give a leather-like sheet material 1.

Table 1 shows physical properties of the obtained leather-like sheet material 1.

### Example 2

A leather-like sheet material 2 was prepared in the same manner as in Example 1 except that the fibrous substrate 2 formed of the nonwoven fabric and the elastic polymer was replaced with the nonwoven fabric (fibrous substrate 1) obtained in Referential Example 1.

Table 1 also shows physical properties of the obtained leather-like sheet material 2.

### Example 3

A release sheet (AR167M, supplied by Asahi Roll K.K.) was coated with a "preparation obtained by adding a thickener (HYDRAN ASSISTER T1, supplied by Dainippon Ink and Chemicals, Inc.) to 100 parts of a 33 % water dispersion of one component type polycarbonate/polyether-based polyurethane (HYDRAN TMS236, polycarbonate/polyether = 50/50, supplied by Dainippon Ink and Chemicals, Inc.) and a 5 parts of a colorant (DAILAC BLACK HS9530, supplied by Dainippon Ink and Chemicals, Inc.) with stirring and adjusting its viscosity to 8,000 mPa·s" at a basis weight of 100 g/m², and the formed coating was dried at a temperature of 70°C for 2 minutes and dried at 110°C for 2 minutes. The resultant coating was further surface-coated with a "preparation obtained by mixing 100 parts of a two component type polycarbonate/polyether-based polyurethane adhesive (HYDRAN TMA437, carbonate/ether - 50/50, 45 % water dispersion, supplied by Dainippon Ink and Chemicals, Inc.) with 2 parts of an amino-modified silicone aqueous dispersion (DIC SILICONE A-900, supplied by Dainippon Ink and Chemicals, Inc.), 5 parts of a colorant (DAILAC BLACK HS9530, supplied by Dainippon Ink and Chemicals, Inc.), and a thickener (HYDRAN ASSISTER T1, supplied by Dainippon Ink and Chemicals, Inc.) and adjusting the viscosity of the mixture to 5,000 mPa·s" at a basis weight of 150 g/m². Then, the thus-obtained layer was dried at a temperature of 90°C for 2 minutes, the same fibrous substrate 2 as that in Example 1 was stacked thereon, and the resultant set was caused to pass on a hot cylinder surface having a temperature of 110°C with a roll having a gap of 0.6 mm therefrom for bonding under pressure. Then, the resultant laminate was left in an atmosphere at a temperature of 60°C for 2 days, and then the release sheet was peeled off to give a leather-like sheet material 3.

The thus-obtained leather-like sheet material 3 had a flexibility degree of 1.15 g/cm and had a soft surface. Further, it exhibited an abrasion resistance of 850 times, a flexing resistance of 200,000 times or more and a peeling tenacity of 36 N/cm.

### Example 4

A leather-like sheet material 4 was prepared in the same manner as in Example 1 except that the adhesive in Example 1 was replaced with a "preparation obtained by mixing 100 parts of a two component type polycarbonate/polyether polyurethane adhesive (HYDRAN TMA437, 45 % water dispersion, supplied by Dainippon Ink and Chemicals, Inc.) with 2 parts of a high-molecular-weight dimethylsilicone aqueous dispersion (DIC SILICONE SOFTENER 120, supplied by Dainippon Ink and Chemicals, Inc.), 5 parts of a colorant (DAILAC BLACK HS9530, supplied by Dainippon Ink and Chemicals, Inc.) and a thickener (HYDRAN ASSISTER T1, supplied by Dainippon Ink and Chemicals, Inc.) and adjusting the viscosity of the mixture to 5,000 mPa·s". The resultant leather-like sheet material 4 had a flexibility degree of 1.27 g/cm and a soft surface. Table 1 also shows the physical properties thereof.

### Example 5

A leather-like sheet material 5 was prepared in the same manner as in Example 3 except that the adhesive in Example 3 was replaced with a "preparation obtained by mixing 100 parts of a two component type polyether-based polyurethane adhesive (HYDRAN A441, 45 % water dispersion, supplied by Dainippon Ink and Chemicals, Inc.) with 2 parts of a dimethylsilicone oil aqueous dispersion (DIC SILICONE SOFTENER 300, supplied by Dainippon Ink and Chemicals, Inc.), 5 parts of a colorant (DAILAC BLACK HS9530, supplied by Dainippon Ink and Chemicals, Inc.) and a thickener (HYDRAN ASSISTER T1, supplied by Dainippon Ink and Chemicals, Inc.) and adjusting the viscosity of the mixture to 5,000 mPa·s". The resultant leather-like sheet material 5 had a flexibility degree of 1.36 g/cm and had a soft surface. It also exhibited an abrasion resistance of 690 times, a flexing resistance of 200,000 times or more and a peeling tenacity of 32 N/cm.

### Example 6

A leather-like sheet material 6 was prepared in the same manner as in Example 3 except that the adhesive in Example 3 was replaced with a "preparation obtained by mixing 100 parts of a two component type polyether-based polyurethane adhesive (HYDRAN A441, 45 % water dispersion, supplied by Dainippon Ink and Chemicals, Inc.) with 6 parts of a reactive H-silicone aqueous dispersion (DIC SILICONE CONC V, supplied by Dainippon Ink and Chemicals, Inc.), 2 parts of a catalyst (DIC SILICONE, CATALYST SC30, supplied by Dainippon Ink and Chemicals, Inc.), 5 parts of a colorant (DAILAC BLACK HS9530, supplied by Dainippon Ink and Chemicals, Inc.) and a thickener (HYDRAN ASSISTER T1, supplied by Dainippon Ink and Chemicals, Inc.) and adjusting the viscosity of the mixture to 5,000 mPa·s" and that the fibrous substrate 2 was replaced with the fibrous substrate 3 impregnated with water.

The thus-obtained leather-like sheet material 6 had a flexibility degree of 0.87 g/cm and had a soft surface. Further, when it was measured for contents of dimethylformamide, methyl ethyl ketone, toluene, methyl alcohol and isopropyl alcohol, the contents were a detection limit of 2 ppm or less. Table 1 also shows physical properties thereof.

### Example 7

The fibrous substrate 2 formed of a nonwoven fabric and an elastic polymer obtained in Referential Example 2 was used.

The fibrous substrate 2 was surface-coated with a "preparation obtained by mixing 100 parts of a water-dispersible polyurethane adhesive (HYDRAN A441, 45 % concentration, supplied by Dainippon Ink and Chemicals, Inc.) as an elastic polymer for preliminary impregnation with 2 parts of an H silicone aqueous dispersion (DIC SILICONE CONC V, supplied by Dainippon Ink and Chemicals, Inc.), 2 parts of a catalyst (DIC SILICONE CATALYST SC30, supplied by Dainippon Ink and Chemicals, Inc.), 5 parts of a colorant (DAILAC BLACK HS9530, supplied by Dainippon Ink and Chemicals, Inc.), 6 parts of a crosslinking agent (HYDRAN ASSISTER C-50, supplied by Dainippon Ink and Chemicals, Inc.) and a thickener (HYDRAN ASSISTER T1, supplied by Dainippon Ink and Chemicals, Inc.) and adjusting the viscosity of the mixture to 5,000 mPa·s", using a coating bar having a diameter of 15 mm, with a gap of 1.0 mm that was the same as the substrate thickness. Then, the resultant coating was dried at a temperature of 90°C for 2 minutes and dried at a temperature of 110°C for 1 minute. The coverage of a solid on the obtained fibrous substrate after the drying of the treatment liquid composed mainly of the water-born elastic polymer (polyurethane) was 42 g/m², and it was microscopically found that the infiltration depth of the polyurethane as the elastic polymer from the surface was 32 µm.

Then, a release sheet (R53, supplied by LINTEC CORPORATION) was coated with a "preparation obtained by adding a thickener (HYDRAN ASSISTER T1) and 5 parts of a colorant (DAILAC BLACK HS9530) to 100 parts of a 33 % water dispersion of a polyurethane (HYDRAN WLS201, supplied by Dainippon Ink and Chemicals, Inc.) with stirring and adjusting the viscosity of the mixture to 8,000 mPa·s" at a basis weight of 90 g/m², and the coating was dried at a temperature of 70°C for 2 minutes and dried at 110°C for 2 minutes to form an elastic polymer film. The thus-formed film was further surface-coated with a "preparation obtained by mixing 100 parts of a water-dispersible polyurethane adhesive (HYDRAN A441, 45 % concentration, supplied by Dainippon Ink and Chemicals, Inc.) with 5 parts of a colorant (DAILAC BLACK HS9530), 1.5 parts of thermally expandable microcapsules (Matsumoto Microsphere F-50, supplied by Matsumoto Yushi-Seiyaku Co., Ltd.) and a thickener (HYDRAN ASSISTER T1) and adjusting the viscosity of the mixture to 5,000 mPa·s" at a basis weight of 150 g/m². Then, the resultant coating was dried at a temperature of 90°C for 2 minutes, the fibrous substrate 2 formed of a nonwoven fabric and an elastic polymer was stacked thereon, and the resultant set was caused to pass on a hot cylinder having a temperature of 110°C with a roll having a gap of 0.6 mm therefrom for bonding under pressure. Then, the resultant laminate was left in an atmosphere at a temperature of 60°C for 2 days, and then the release sheet was peeled off to give a leather-like sheet material 7. The thus-obtained leather-like sheet material 7 had a flexibility degree of 0.55 g/cm and had a soft surface. Table 2 shows physical properties thereof.

### Example 8

A leather-like sheet material 8 was prepared in the same manner as in Example 7 except that the coverage of a dried solid of the treatment liquid composed mainly of the water-born elastic polymer used in Example 7 on the fibrous substrate 2 was changed to 34 g/m². In this case, it was microscopically found that the infiltration depth of the polyurethane as the elastic polymer from the surface was 25 µm.

The thus-obtained leather-like sheet material 8 had a flexibility degree of 0.90 g/cm and had a soft surface. Table 2 shows physical properties thereof.

### Example 9

A leather-like sheet material 9 was prepared in the same manner as in Example 7 except that the fibrous substrate 2 used in Example 7 was replaced with the fibrous substrate 3 that impregnated water-born polymer. When it was measured for contents of dimethylformamide, methyl ethyl ketone, toluene, methyl alcohol and isopropyl alcohol, the contents were a detection limit of 2 ppm or less. Table 2 also shows physical properties of the obtained leather-like sheet material 9.

### Example 10

The fibrous substrate 1 (nonwoven fabric) obtained in Referential Example 1 was used.

The fibrous substrate 1 was surface-coated with the same treatment liquid composed mainly of the water-born elastic polymer as that used in Example 7 and the formed coating was dried. The coverage of a solid on the fibrous substrate 1 after the drying of the treatment liquid composed mainly of the water-born elastic polymer (polyurethane) was 42 g/m². and it was microscopically found that the infiltration depth of the polyurethane as the elastic polymer from the surface was 25 µm.

Then, a release sheet (R53, supplied by LINTEC CORPORATION) was coated with a "preparation obtained by adding a thickener (HYDRAN ASSISTER T1) and 5 parts of a colorant (DAILAC BLACK HS9530) to 100 parts of a 33 % water dispersion of a polyurethane (HYDRAN WLS201, supplied by Dainippon Ink and Chemicals, Inc.) with stirring and adjusting the viscosity of the mixture to 8,000 mPa·s" at a basis weight of 90 g/m², and the coating was dried at a temperature of 70°C for 2 minutes and dried at 110°C for 2 minutes to form an elastic polymer film. The thus-formed coating was further surface-coated with a "preparation obtained by mixing 100 parts of a water-dispersible polyurethane adhesive (HYDRAN A441, 45 % concentration, supplied by Dainippon Ink and Chemicals, Inc.) with 5 parts of a colorant (DAILAC BLACK HS9530) and a thickener (HYDRAN ASSISTER T1) and adjusting the viscosity of the mixture to 6,000 mPa·s" at a basis weight of 150 g/m². Then, the resultant coating was dried at a temperature of 90°C for 2 minutes, the fibrous substrate 1 was stacked thereon, and the resultant set was caused to pass on a hot cylinder having a temperature of 110°C with a roll having a gap of 0.6 mm therefrom for bonding under pressure. Then, the resultant laminate was left in an atmosphere at a temperature of 60°C for 2 days, and then the release sheet was peeled off to give a leather-like sheet material 10. When it was measured for contents of dimethylformamide, methyl ethyl ketone, toluene, methyl alcohol and isopropyl alcohol, the contents were a detection limit of 2 ppm or less. Table 2 also shows physical properties of the obtained leather-like sheet material 10.

### Comparative Example 1

A sheet material 11 was obtained in the same manner as in Example 1 except that the adhesive in Example 1 was replaced with a silicone-compound-free "preparation obtained by mixing 100 parts of a polyether-based polyurethane adhesive (HYDRAN A441, 45 % water dispersion, supplied by Dainippon Ink and Chemicals, Inc.) with 5 parts of a colorant (DAILAC BLACK HS9530, supplied by Dainippon Ink and Chemicals, Inc.) and a thickener (HYDRAN ASSISTER T1, supplied by Dainippon Ink and Chemicals, Inc.) and adjusting the viscosity of the mixture to 5,000 mPa·s".

The thus-obtained sheet material 11 had a flexibility degree of 1.51 g/cm and had a hard surface. Further, the depth of infiltration of an adhesive layer into the substrate was as small as 5 µm since no silicone was contained, and the sheet material 11 was poor in abrasion resistance. Table 3 shows physical properties thereof.

### Comparative Example 2

A sheet material 12 was obtained in the same manner as in Example 3 except that the adhesive in Example 3 was replaced with a silicone-compound-free "preparation obtained by mixing 100 parts of a polyether-based polyurethane adhesive (HYDRAN A441, 45 % water dispersion, supplied by Dainippon Ink and Chemicals, Inc.) with 5 parts of a colorant (DAILAC BLACK HS9530, supplied by Dainippon Ink and Chemicals, Inc.) and a thickener (HYDRAN ASSISTER T1, supplied by Dainippon Ink and Chemicals, Inc.) and adjusting the viscosity of the mixture to 5,000 mPa·s".

The thus-obtained sheet material 12 had a flexibility degree of 2.12 g/cm and had a hard surface. Further, it also exhibited an abrasion resistance of 350 times, a flexing resistance of 160,000 times or more and a peeling tenacity of 35 N/cm.

### Comparative Example 3

A release sheet (R53, supplied by LINTEC CORPORTION) was coated with a preparation obtained by adding 5 parts of a colorant (DAILACK BLACK L1770S, supplied by Dainippon Ink and Chemicals, Inc.) to 100 parts of a solution of a polyurethane having a solid concentration of 16 % in a mixture organic solvent of DMF and methyl ethyl ketone (CRISVON NB130, supplied by Dainippon Ink and Chemicals, Inc.) with stirring, at a basis weight of 170 g/m², and the formed coating was dried at a temperature of 90°C for 2 minutes and dried at 120°C for 2 minutes. The thus-formed coating was further surface-coated with a preparation obtained by mixing 100 parts of an adhesive of a DMF-methyl ethyl ketone solution having a solid content of 26 % (TA290:TA265-50:50, supplied by Dainippon Ink and Chemicals, Inc.) with 6 parts of a crosslinking agent (RESAMINE NE crosslinking agent, supplied by Dainichiseika Color & Chemicals Mfg. Co., Ltd.), 0.3 part of a catalyst (CRISVON Accel T, supplied by Dainippon Ink and Chemicals, Inc.) and 5 parts of a colorant (DAILAC BLACK SL3430, supplied by Dainippon Ink and Chemicals, Inc.), at a basis weight of 130 g/m², and then the thus-formed coating was dried at a temperature of 90°C for 2 minutes. The fibrous substrate 2 obtained in Referential Example 2 was stacked thereon, and the resultant set was caused to pass on a hot cylinder having a temperature of 110°C with a roll having a gap of 0.6 mm therefrom for bonding under pressure. Then, the resultant laminate was left in an atmosphere at a temperature of 60°C for 2 days, and then the release sheet was peeled off to give a sheet material 13.

Table 3 also shows physical properties of the obtained sheet material 13.

### Comparative Example 4

A sheet material 14 was obtained in the same manner as in Example 7 except that the fibrous substrate 2 used in Example 7 was not subjected to the surface treatment with the water-based treatment liquid composed mainly of an elastic polymer.

The thus-obtained sheet material 14 was foldable like paper and was also hard in texture. It failed to give the properties intended in the present invention and was not proper as an artificial leather. When a cross section thereof was observed through a microscope, the adhesive used for the laminating infiltrated the fiber aggregate deeply from its surface. Table 3 also shows physical properties thereof.

### Comparative Example 5

The fibrous substrate 2 used in Example 7 was surface-coated with the water-based treatment liquid composed mainly of the water-born elastic polymer used in Example 7 with a 0.3 mm thick doctor knife with a gap of 0.8 mm that was 80 % of the nonwoven fabric thickness. Then, the formed coating was dried at a temperature of 90°C for 2 minutes and dried at a temperature of 110°C for 1 minute. The coverage of a polyurethane on the fibrous substrate obtained was 18 g/m² and it was microscopically found that the depth of infiltration of the elastic polymer from the substrate surface was 86 µm. In the infiltration portion, the elastic polymer was discrete without being continuous. Then, a sheet material 15 was prepared by the same procedures as those in Example 7.

The thus-obtained sheet material 15 was foldable like paper and was also hard in texture. It failed to give the properties intended in the present invention and was not proper as an artificial leather. When a cross section thereof was observed through a microscope, the adhesive infiltrated the fiber aggregate deeply from its surface, but no adhesive layer was formed. Table 3 also shows physical properties thereof.

**Table 1**

| No. | | Example 1 | Example 2 | Example 4 | Example 6 |
|---|---|---|---|---|---|
| Fibrous substrate | | Nonwoven fabric | Nonwoven fabric | Nonwoven fabric | Nonwoven fabric |
| | Thickness mm | 1.0 | 1.0 | 1.0 | 1.0 |
| | Type of elastic polymer | Solvent- based | Nil | Solvent-based | Water-born |
| Film layer | | Water-born | Water-born | Water-born | Water-born |
| | Thickness µm | 40 | 40 | 40 | 40 |
| Adhesive layer | | Water-born | Water-born | Water-born | Water-born |
| | Thickness µm | 70 | 70 | 70 | 70 |
| | Basis weight on film side (wet) g/m² | 150 | 150 | 150 | 150 |
| | Basis weight on substrate side (dry) g/m² | - | - | - | - |
| | Infiltration depth µm | 10 | 30 | 10 | 15 |
| | Silicone | H silicone * | H silicone * | Dimethyl silicone | H silicone * |
| Flexibility degree g/cm | | 0.95 | 0.55 | 1.27 | 0.87 |
| Abrasion resistance times | | 1,000 | 920 | 720 | 1,050 |
| Flexing resistance times | | 200,000 times or more | 200,000 times or more | 200,000 times or more | 200,000 times or more |
| Peeling tenacity N/cm | | 37 | 35 | 33 | 33 |

| | | | | | |
|---|---|---|---|---|---|
| H silicone*: Reactive H silicone Solvent-based: Represents use of organic solvent. Water-born: Represents use of water solution or water dispersion. | | | | | |

**Table 2**

| No. | | Example 7 | Example 8 | Example 9 | Example 10 |
|---|---|---|---|---|---|
| Fibrous substrate | | Nonwoven fabric | Nonwoven fabric | Nonwoven fabric | Nonwoven fabric |
| | Thickness mm | 1.0 | 1.0 | | 1.0 |
| | Elastic polymer type | Solvent-based | Solvent-based | Water-born | Nil |
| Film layer | | Water-born | Water-born | Water-born | Water-born |
| | Thickness µm | 35 | 35 | 35 | 35 |
| Adhesive layer | | Water-born | Water-born | Water-born | Water-born |
| | Thickness µm | 110 | 100 | 110 | 90 |
| | Basis weight on film side (wet)g/m² | 150 | 150 | 150 | 150 |
| | Presence of gas bubbles | yes | Yes | Yes | No |
| | Basis weight on substrate side (dry) g/m² | 42 | 34 | 42 | 42 |
| | Infiltration depth µm | 32 | 25 | 20 | 25 |
| | Silicone | H silicone * | H silicone * | H silicone * | H silicone * |
| Flexibility degree 9/cm | | 0.55 | 0.90 | 1.10 | 1.05 |
| Abrasion times resistance times | | 1,600 | 2,100 | 1,500 | 1,200 |
| Flexing resistance times | | 200,000 times or more | 200,000 times or more | 200,000 times or more | 200,000 times or more |
| Peeling tenacity N/cm | | 44 | 44 | 33 | 31 |

| | | | | | |
|---|---|---|---|---|---|
| H silicone*: Reactive H silicone | | | | | |

**Table 3**

| No. | | C. Ex 1 | C. Ex 3 | C. Ex 4 | C. Ex 5 |
|---|---|---|---|---|---|
| Fibrous substrate | | Nonwoven fabric | Nonwoven fabric | Nonwoven fabric | Nonwoven fabric |
| | Thickness mm | 1.0 | 1.0 | 1.0 | 1.0 |
| | Elastic polymer type | Solvent-based | Solvent-based | Solvent-based | Solvent-based |
| Film layer | | Water-born | Solvent-based | Water-born | Water-born |
| | Thickness µm | 40 | 40 | 40 | 40 |
| | Adhesive layer | Water-born | Solvent-based | Water-born | Water-born |
| | Thickness µm | 70 | 70 | 80 | 80 |
| | Basis weight on film side (wet)g/m² | 150 | 150 | 150 | 150 |
| | Presence of gas bubbles | No | No | Yes | Yes |
| | Basis weight on substrate side (dry)g/m² | - | - | - | 18 |
| | Infiltration depth µm | 5 | 5 | 5 | 86** |
| | Silicone | No | H silicone * | No | H silicone * |
| Flexibility degree g/cm | | 1.51 | 1.35 | 1.50 | 1.70 |
| Abrasion resistance times | | 370 | 370 | 390 | 460 |
| Flexing resistance times | | 180,000 times | 140,000 times | 70,000 times | 60,000 times |
| Peeling tenacity N/cm | | 37 | 29 | 7 | 11 |

| | | | | | |
|---|---|---|---|---|---|
| C. Ex: Comparative Example H silicone**: Reactive H silicone 86**: Adhesive was not continuous and formed no adhesive layer. | | | | | |

## Claims

1. A process for the production of a leather-like sheet material by attaching a fibrous substrate and an elastomeric film layer to each other, which comprises applying a water solution or water dispersion of an elastic polymer, the water solution or water dispersion containing a silicone compound, to the attachment surface of one of the fibrous substrate and the elastomeric film layer and drying the applied solution or dispersion.

2. The process for the production of a leather-like sheet material as recited in claim 1, wherein the water solution or water dispersion of an elastic polymer, the water solution or water dispersion containing a silicone compound, is applied to the attachment surface of said fibrous substrate, the water solution or water dispersion of an elastic polymer is applied to the attachment surface of the elastomeric film layer, and the fibrous substrate and the elastomeric film layer are attached to each other, followed by drying.

3. The process for the production of a leather-like sheet material as recited in claim 1, wherein the water solution or water dispersion of an elastic polymer, the water solution or water dispersion containing a silicone compound, is applied to the attachment surface of said fibrous substrate, the water solution or water dispersion of an elastic polymer, the water solution or water dispersion containing thermally expandable microcapsules having a diameter of 10 to 80 µm, is applied to the attachment surface of the elastomeric film layer, and the fibrous substrate and the elastomeric film layer are attached to each other, followed by drying.

4. The process for the production of a leather-like sheet material as recited in claim 1, wherein said fibrous substrate and said elastomeric film layer are attached to each other and wherein the adhesive layer infiltrates the fibrous substrate for the bonding, the adhesive layer having an infiltration thickness of 15 to 50 µm from the fibrous substrate surface in its contact interface to the fibrous substrate.

5. The process for the production of a leather-like sheet material as recited in claim 1, wherein said fibrous substrate and said elastomeric film layer are attached to each other and dried, and then the resultant set is nipped with a hot roll at a temperature of 100 to 150°C

## Patentansprüche

1. Verfahren zum Herstellen eines lederartigen, blattförmigen Materials durch das Befestigen eines faserartigen Substrats und einer Elastomer-Folienschicht aneinander, umfassend das Aufbringen einer wässrigen Lösung oder wässrigen Dispersion eines elastischen Polymers, wobei die wässrige Lösung oder wässrige Dispersion eine Silikonverbindung enthält, auf die Befestigungsoberfläche von einem von dem faserartigen Substrat und der Elastomer-Folienschicht, und das Trocknen der aufgebrachten Lösung oder Dispersion.

2. Verfahren zum Herstellen eines lederartigen, blattförmigen Materials nach Anspruch 1, wobei die wässrige Lösung oder wässrige Dispersion eines elastischen Polymers, wobei die wässrige Lösung oder wässrige Dispersion eine Silikonverbindung enthält, auf die Befestigungsoberfläche des faserartigen Substrats aufgebracht wird, die wässrige Lösung oder wässrige Dispersion eines elastischen Polymers auf die Befestigurigsoberfläche der Elastomer-Folienschicht aufgebracht wird, und das faserartige Substrat und die Elastomer-Folienschicht aneinander befestigt werden, gefolgt von dem Trocknen.

3. Verfahren zum Herstellen eines lederartigen, blattförmigen Materials nach Anspruch 1, wobei die wässrige Lösung oder wässrige Dispersion eines elastischen Polymers, wobei die wässrige Lösung oder wässrige Dispersion eine Silikonverbindung enthält, auf die Befestigungsoberfläche des faserartigen Substrats aufgebracht wird, die wässrige Lösung oder wässrige Dispersion eines elastischen Polymers, wobei die wässrige Lösung oder wässrige Dispersion thermisch expandierbare Mikrokapseln mit einem Durchmesser von 10 bis 50 µm enthält, auf die Befestigungsoberfläche der Elastomer-Folienschicht aufgebracht wird, und das faserartige Substrat und die Elastomer-Folienschicht aneinander befestigt werden, gefolgt von dem Trocknen.

4. Verfahren zum Herstellen eines lederartigen, blattförmigen Materials nach Anspruch 1, wobei das faserartige Substrat und die Elastomer-Folienschicht aneinander befestigt werden und wobei die Haftmittelschicht das faserartige Substrat für das Binden infiltriert, wobei die Haftmittelschicht eine infiltrationsdicke von 15 bis 50 µm von der faserartigen Substratoberfläche in ihrer Kontaktgrenzfläche zum faserartigen Substrat aufweist.

5. Verfahren zum Herstellen eines lederartigen, blattförmigen Materials nach Anspruch 1, wobei das faserartige Substrat und die Elastomer-Folienschicht aneinander befestigt und getrocknet werden, und die resultierende Einheit anschließend mit einer Heißwalze bei einer Temperatur von 100 bis 150°C abgequetscht wird.

## Revendications

1. Procédé de production d'une matière en feuille de type cuir par fixation d'un substrat fibreux et d'une couche de film élastomère l'un à l'autre, qui consiste à appliquer une solution aqueuse ou une dispersion aqueuse d'un polymère élastique, la solution aqueuse ou la dispersion aqueuse contenant un composé de silicone, sur la surface de fixation de l'un des deux parmi le substrat fibreux et la couche de film élastomère, et à sécher la solution ou la dispersion appliquée.

2. Procédé de production d'une matière en feuille de type cuir selon la revendication 1, dans lequel la solution aqueuse ou la dispersion aqueuse d'un polymère élastique, la solution aqueuse ou la dispersion aqueuse contenant un composé de silicone, est appliquée sur la surface de fixation dudit substrat fibreux, la solution aqueuse ou la dispersion aqueuse d'un polymère élastique est appliquée sur la surface de fixation de la couche de film élastomère, et le substrat fibreux et la couche de film élastomère sont fixés l'un à l'autre, puis séchés.

3. Procédé de production d'une matière en feuille de type cuir selon la revendication 1, dans lequel la solution aqueuse ou la dispersion aqueuse d'un polymère élastique, la solution aqueuse ou la dispersion aqueuse contenant un composé de silicone, est appliquée sur la surface de fixation dudit substrat fibreux, la solution aqueuse ou la dispersion aqueuse d'un polymère élastique, la solution aqueuse ou la dispersion aqueuse contenant des microcapsules thermoexpansibles, ayant un diamètre de 10 à 50 µm, est appliquée sur la surface de fixation de la couche de film élastomère, et le substrat fibreux et la couche de film élastomère sont fixés l'un à l'autre, puis séchés.

4. Procédé de production d'une matière en feuille de type cuir selon la revendication 1, dans lequel ledit substrat fibreux et ladite couche de film élastomère sont fixés l'un à l'autre et dans lequel la couche adhésive infiltre le substrat fibreux pour la liaison, la couche adhésive ayant une épaisseur d'infiltration de 15 à 50 µm en partant de la surface du substrat fibreux à son interface de contact avec le substrat fibreux.

5. Procédé de production d'une matière en feuille de type cuir selon la revendication 1, dans lequel ledit substrat fibreux et ladite couche de film élastomère sont fixés l'un à l'autre et séchés, et puis l'ensemble résultant est pincé avec un rouleau chaud à une température de 100 à 150°C.
